# NEW EUROPEAN PATENT SPECIFICATION

(11) **EP 0 792 589 B2**
(45) Date of publication and mention of the opposition decision: **06.04.2005**
(45) Mention of the grant of the patent: 17.10.2001
(21) Application number: 97301181.0
(22) Date of filing: 24.02.1997
(51) Int. Cl.: A23L 2/60, A23L 2/44, A23L 1/236

(54) **Use of erythritol in soft drinks**
Verwendung von Erythrit in Getränken
Usage de l'érythritol dans les boissons

(30) Priority: 29.02.1996 GB 9604334
(43) Date of publication of application: 03.09.1997
(73) Proprietor: CERESTAR HOLDING BV, NL-4550 AA Sas Van Gent (NL)
(72) Inventor: Gonze, Michel Henri André, 1020 Bruxelles (BE)
(74) Representative: Wilkinson, Stephen John

(56) References cited:
- EP-A- 0 287 957
- DATABASE WPI Section Ch, Week 9614 Derwent Publications Ltd., London, GB; Class B05, AN 96-136213 XP002014128 & JP 08 027 034 A (NIKKEN CHEM CO LTD) , 30 January 1996
- STARKE, vol. 45, no. 11, - 1993 WEINHEIM DE, pages 400-405, XP000673122 H.RÖPER ET AL.: "Erythritol,a new raw material for food and non-food application"
- JAPAN AGRICULTURAL RESEARCH QUATERLY, vol. 29, 1995, pages 49-55, XP000602369 T.KASUMI: "Fermentative production of polyols and utilization for food and other products in Japan"
- "Healthy food with C*Eridex", brochure published by Cerestar, 02.95,4 pages
- "C*Eridex high purity erythritol for new health food applications", M. Gonze, FI Japan-Tokyo, April 24-26,1995 (New Product Seminar)

## Description

The present invention relates to prolonged storage of calorie-reduced soft drinks. The prolonged storage is made possible by the use of erythritol. Specifically, the invention relates to the use of erythritol in combination with an intense sweetener which would normally deteriorate. The erythritol serves to preserve the taste-quality and the stability of the soft drinks during prolonged storage when the intense sweetener is aspartame.

### Background of the Invention

Several hundred new beverages are introduced on the market each year. Not many of these drinks will turn out a commercial success. The surviving beverages will be those with the highest quality. Due to a growing health trend there is an increasing interest in the development of calorie-reduced and sugar-free soft drinks. An important development in the area of soft drinks is the use of intense sweeteners. Through the application of the sweeteners 'sweet' does not longer mean 'calorie rich' and cariogenic.

Several intense sweeteners are already approved and are commercially available. Whereas saccharin and cyclamate have been available for decades new sweeteners such as aspartame and acesulfame K have more recently entered the market.

In order to compete with existing sweeteners intense sweeteners should have a sweetness profile resembling that of sucrose, moreover other characteristics such as mouth feel and after taste should be the same or at least similar. To obtain a desirable taste the use of combinations of erythritol and intense sweeteners has been proposed for example in European Patent EP 0 287 957 B. This patent describes the modification of the taste of erythritol by the addition to erythritol of intense sweeteners. JP-A-08027034 (abstract) describes the use erythritol in oral liquids containing medicines. The aim of the addition of erythritol being to refresh the taste. There is no mention of the addition of intense sweeteners.
Röper et al. (Stärke 1993, 45(11) p. 400-405) describes characteristics and potential applications of erythritol in general terms.
T. Kasumi (Jap. Agric. Res. Qu. 1995, 29 p.49-55) again describes in general potential applications of erythritol.
A further characteristic which makes sucrose a preferred sweetener is the good storage stability. The sweet taste of sucrose is not lost during prolonged storage.

One of the widely approved intense sweeteners is aspartame. This sweetener has a limited heat and storage stability which is moreover pH dependent. Under the acidic conditions of most soft drinks aspartame is unstable although the instability under basic conditions is even greater. The instability is manifest in the loss of sweet taste and the development of off-taste. Soft drinks such as orange drinks, cola, lemon etc. containing Aspartame cannot be stored for a few weeks with retention of desired taste under normal storage conditions. The stability is dependent to a high degree on the pH and the temperature. This instability phenomenon was for example reported in 'Handbuch Süssungsmittel' Ed. Von Rymon Lipinski and Schiweck, Behr's Verlag, Hamburg 1991, Chapter V. 3 Aspartam p. 425-444.

The potential use of aspartame is greatly limited by the mentioned storage instability

In order to overcome the drawbacks of the use of aspartame in soft drinks several solutions have been proposed. The present invention describes a new solution.

### Summary of the Invention

The present invention relates to the use of erythritol to increase the storage stability of aspartame containing calorie-reduced soft drinks. It is disclosed that the combination of aspartame and erythritol results in prolonged storage stability of soft drinks as manifest from the preserved taste. The erythritol is present in such an amount that the aspartame containing soft drink is stable during prolonged storage.

The present invention discloses calorie-reduced soft drinks comprising aspartame and characterised in that they further contain erythritol and that the erythritol is present in an amount of 0.1-3% (w/v).

The present invention discloses the use of 0.1-3.0% (w/v) erythritol for increasing the storage stability of calorie-reduced soft drinks containing aspartame.

Finally the present invention discloses a method of preserving the taste and sweetness of an aspartame-containing calorie-reduced soft drink characterised in that 0.1-3% (w/v) of erythritol is added to the soft drink.

### Description of the Figures

- Figure 1: shows the sweetness of the orange-flavoured drinks of Example 2 immediately after preparation as perceived by a 10 person taste panel. The samples are standard (sugar containing), calorie-reduced with only aspartame and calorie-reduced with aspartame and 1.5% (w/v) erythritol. (0.5 and 1% (w/v) drinks were prepared but not tested).
- Figure 2: shows the taste-quality of the same samples.
- Figure 3: shows the sweetness of the orange-flavoured drinks after one month storage. in this case samples containing 0.5 and 1% (w/v) erythritol were also tasted.
- Figure 4: shows the taste-quality of the samples of Figure 3..

### Detailed description of the invention

Intense sweeteners are often used in soft drinks especially in calorie-reduced soft drinks. To this end a soft drink composition is prepared wherein the sugar based sweetener is at least partially replaced with the intense sweetener. Standard recipes for the preparation of soft drinks are known and although specific details are kept secret by the producers the general compositions do not differ too much.

As mentioned before the use of aspartame as an intense sweetener is hampered by its instability. The present invention solves this problem by the addition of erythritol.

The amounts used in the combination of Aspartame and erythritol as disclosed in the present invention can be adapted to the presence of specific other components if necessary.

It is evident that in order to observe the mentioned effect it is not necessary to replace all the sugar by the combination of aspartame and erythritol. The effect of stabilisation of aspartame is also present in soft drinks which have a lower calorie-reduction than the 100 % reduction as herein disclosed.

As the observed instability phenomenon is pH and temperature dependent the phenomenon is observed in different soft drinks such as orange, lemon, cola etc. and is therefore not restricted to the use of certain specifically mentioned flavours as illustrated in the present description. Orange flavour, lemon flavour and cola flavour are used in the present description and it is recognised that these flavours may have a masking effect during the taste tests.

Aspartame is used in amounts of from 0.02 to 0.09 % (w/v) preferably between 0.04 and 0.06 % (w/v).

Standard (concentrated) solutions were prepared and the concentrated solutions were diluted. Sugar containing solutions were compared with samples wherein the sugar was replaced with a combination of aspartame and erythritol or only aspartame.

A 10 person taste panel analysed the sweetness and taste-quality immediately after production and after a certain storage time.

It was found that replacement of sugar by aspartame gave a lower taste quality which even deteriorated upon prolonged storage.

The taste quality was found to be constant even after two months storage of bottled soft drinks preparations in the daylight and at room temperature.

Another phenomenon observed with orange flavour is the haze formation perceived upon prolonged storage. It was also found that erythritol diminished haze formation of the orange flavour if not completely than at least to a large extent, especially in soft drinks which were not 100 % calorie-reduced.

### Examples

### Example 1

A 100% calorie-reduced soft drink (orange) containing aspartame and erythritol (3% on sweetness basis i.e. approximately 0.27% w/v) was made. The following ingredients were mixed:

| Basic solution | |
|---|---|
| erythritole | 18.9 g |
| aspartame | 3.8 g |
| sodium benzoate (10 % solution) | 5 ml |
| ascorbic acid (10% solution) | 6 g |
| citric acid (50% solution) | 20 ml |
| flavour orange (Wild, German) | 14 g |

Water was added to make up 1 litre.

30 ml of the basic solution was bottled and diluted with carbonated water to 210 ml in the bottles.

As a blank basic solution was made without the addition of erythritol.

Bottles were stored in the dark at 20 °C and at room temperature under daylight conditions.

Samples were submitted to a taste panel immediately after production and after 3 months storage.
It was found that the taste quality of the bottles containing aspartame and erythritol was conserved, whereas this was not the case with the drinks that contained no erythritol.

### Example 2

Cola, lemon and orange soft drinks were prepared as follows.

### 2.1. Orange soft drinks

| Standard formula | |
|---|---|
| Composition | Dosing |
| Sugar - 62.5 Brix solution | 780 ml |
| Sodium benzoate 10 % (w/v) | 5 ml |
| Ascorbic acid 10% (w/v) | 6 g |
| Citric acid 50% (w/v) | 20 ml |
| Orange flavour (Dosage : 2 kg/1000 L soft drink) | 14 g |
| add water to | 1 litre |

The listed ingredients are mixed under agitation. This 'pre-mix' solution is mixed with carbonated deaerated water (30 ml mix with 180 ml water) to produce the full calorie soft drink. This mixture is then tested and bottled and stored.

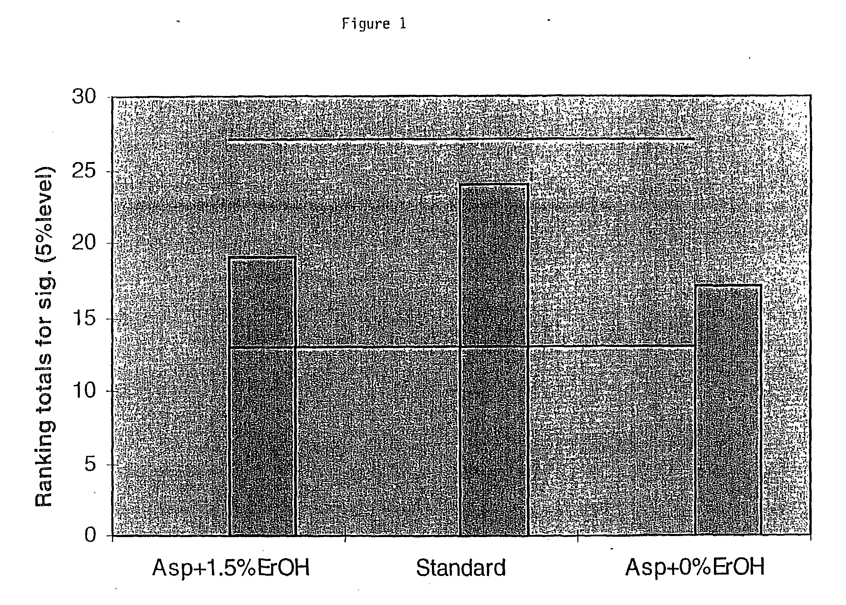

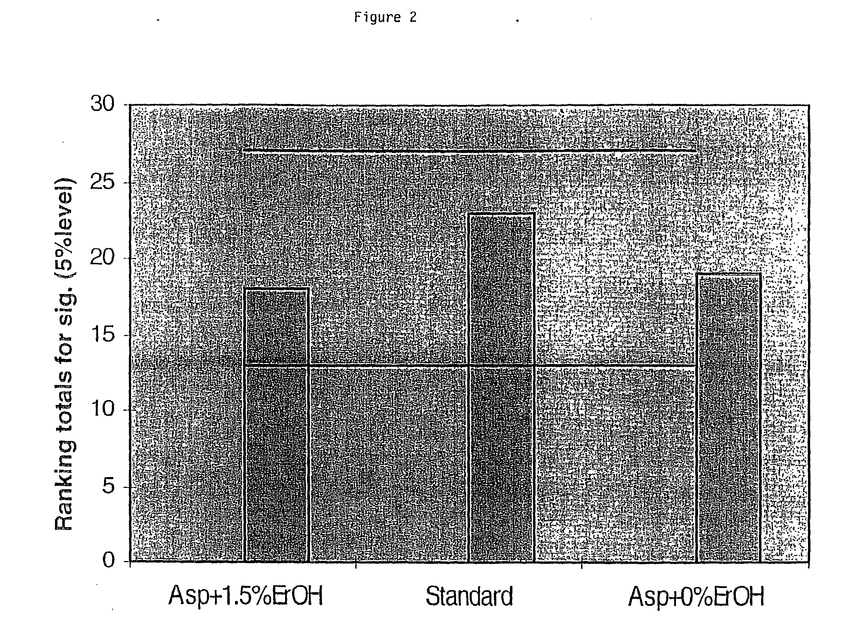

In the 100% calorie reduced orange drink the sugar is replaced with aspartame (3.319-3.918 g) and erythritol (0-105 g) in the pre-mix.
After seven fold dilution samples containing 0 and 1.5 % (w/v) erythritol were tested with respect to sweetness and taste-quality. From Figures 1 and 2 it can be seen that there is no significant difference in sweetness or taste-quality immediately after production.

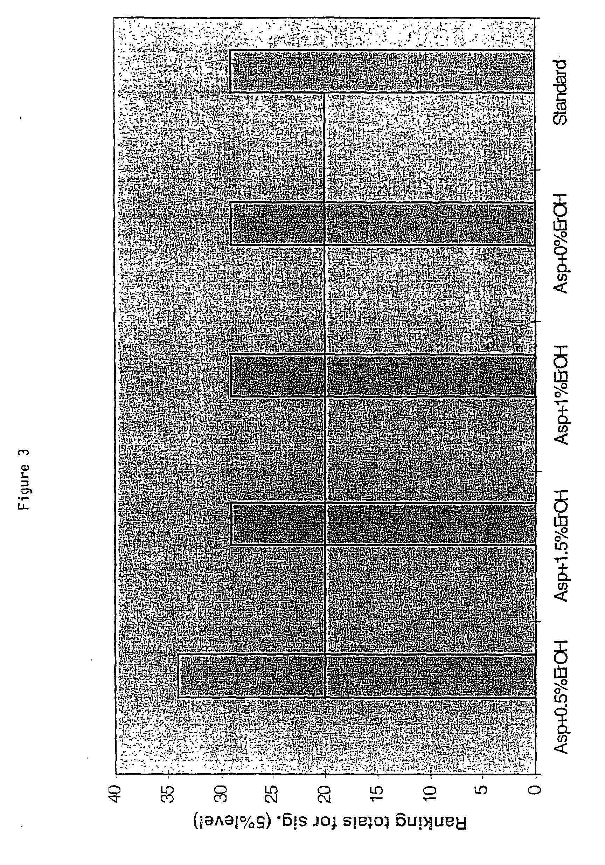

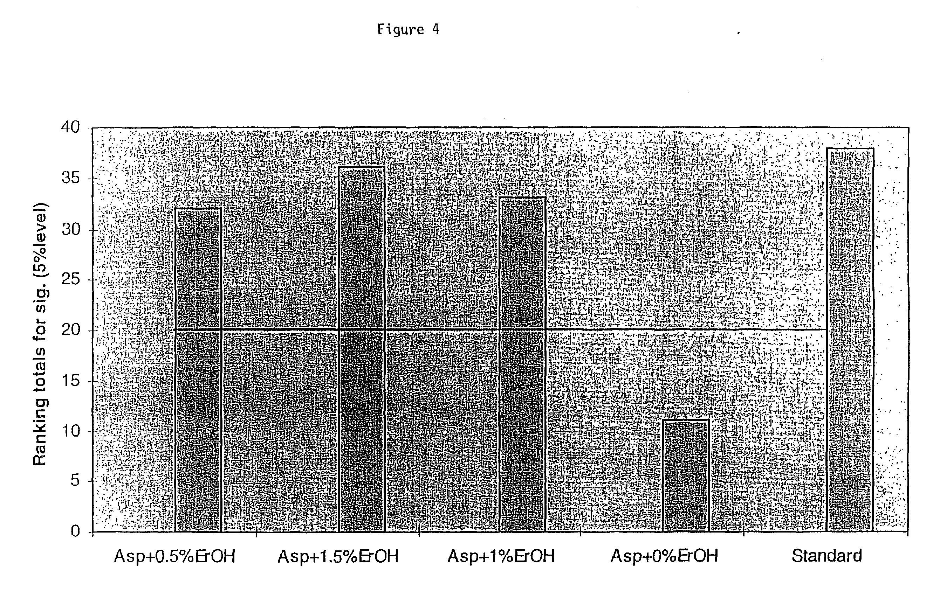

After 1 month storage at room temperature and in the daylight it can be seen from Figure 3 that the sweetness is the same for all samples. Figure 4 shows that the taste-quality has become unacceptable for the non-erythritol containing samples.

### 2.2. Lemon soft drink

| Standard formula | |
|---|---|
| Composition | Dosing |
| Sugar - 62.5 Brix solution | 780 ml |
| Sodium benzoate 10 % (w/v) | 5 ml |
| Ascorbic acid 10% (w/v) | 6 g |
| Citric acid 50% (w/v) | 20 ml |
| Lemon flavour (Dosage:1.5kg/1000 L soft drink) | 10.5 g |
| add water to | 1 litre |

Samples were treated as under 2.1. For the 100% calorie-reduced drinks sugar was replaced with aspartame and erythritol as described in 2.1

The taste panel results were almost identical with the findings under 2.1.

### 2.3. Cola soft drinks

| Standard formula | |
|---|---|
| Composition | Dosing |
| Sugar - 62.5 Brix solution | 780 ml |
| Sodium benzoate 10 % (w/v) | 5 ml |
| Phosphoric acid 85% (w/v) | 4 g |
| Cola flavour (Dosage : 3 kg/1000 L soft drink) | 21 g |
| add water to | 1 litre |

Samples were treated as under 2.1. For the 100% calorie-reduced drinks sugar was replaced with aspartame and erythritol as described in 2.1

The taste panel results were almost identical with the findings under 2.1.

From these experiments it can be concluded that the erythritol serves to preserve the taste-quality of Aspartame containing 100 % calorie-reduced soft drinks. aspartame was added and 0%, 0.5%, 1% and 1.5% erythritol.

## Claims

1. A calorie-reduced soft drink containing erythritol and aspartame, wherein the erythritol is present in an amount of between 0.1 and 3% (w/v) and the aspartame is present in an amount of between 0.02 and 0.09% (w/v).

2. A calorie-reduced soft drink according to claim 1, wherein the aspartame is present in an amount of between 0.04 and 0.06% (w/v).

3. A calorie-reduced soft drink according to claim 1 or claim 2 additionally containing sodium benzoate, ascorbic acid, citric acid and a flavour.

4. A method of preserving the taste and sweetness of an aspartame containing calorie-reduced soft drink **characterised in that** 0.1-3% (w/v) of erythritol is added to the soft drink.

5. A method according to claim 4 **characterised in that** the taste and sweetness are preserved for at least one month at ambient temperature and under daylight conditions.

6. Use of 0.1-3.0% (w/v) of erythritol to increase the storage stability of an aspartame-containing calorie-reduced soft drink.

## Patentansprüche

1. Kalorienreduziertes, alkoholfreies Getränk, enthaltend Erythrit und Aspartam, wobei das Erythrit in einer Menge zwischen 0,1 und 3% (Gewicht/Volumen) vorliegt und das Aspartam in einer Menge zwischen 0,02 und 0,09% (Gewicht/Volumen) vorliegt.

2. Kalorienreduziertes, alkoholfreies Getränk nach Anspruch 1, wobei das Aspartam in einer Menge zwischen 0,04 und 0,06% (Gewicht/Volumen) vorliegt.

3. Kalorienreduziertes, alkoholfreies Getränk nach Anspruch 1 oder 2, das zusätzlich Natriumbenzoat, Ascorbinsäure, Zitronensäure und ein Geschmacksmittel enthält.

4. Verfahren zum Konservieren des Geschmacks und der Süße eines Aspartam-enthaltenden, kalorienreduzierten, alkoholfreien Getränks, **dadurch gekennzeichnet, dass** 0,1-3% (Gewicht/Volumen) Erythrit zu dem alkoholfreien Getränk gegeben werden.

5. Verfahren nach Anspruch 4, **dadurch gekennzeichnet, dass** der Geschmack und die Süße für mindestens einen Monat bei Umgebungstemperatur und unter Tageslichtbedingungen erhalten bleiben.

6. Verwendung von 0,1-3,0 (Gewicht/Volumen) Erythrit zur Erhöhung der Lagerungsstabilität eines Aspartam-enthaltenden, kalorienreduzierten, alkoholfreien Getränks.

## Revendications

1. Boisson non alcoolisée allégée contenant de l'érythritol et de l'aspartame, dans laquelle l'érythritol est présent en une quantité comprise entre 0,1 et 3 % (m/v) et l'aspartame est présent en une quantité comprise entre 0,02 et 0,09 % (m/v).

2. Boisson non alcoolisée allégée selon la revendication 1, dans laquelle l'aspartame est présent en une quantité comprise entre 0,04 et 0,06 % (m/v).

3. Boisson non alcoolisée allégée selon la revendication 1 ou la revendication 2, contenant en outre du benzoate de sodium, de l'acide ascorbique, de l'acide citrique et un arôme.

4. Procédé destiné à préserver le goût et la sucrosité d'une boisson non alcoolisée allégée contenant de l'aspartame, **caractérisé en ce que** 0,1 à 3 % (m/v) d'érythritol est ajouté à ladite boisson non alcoolisée.

5. Procédé selon la revendication 4, **caractérisé en ce que** le goût et la sucrosité sont préservés pendant au moins un mois à température ambiante et à la lumière du jour.

6. Utilisation de 0,1 à 3,0 % (m/v) d'érythritol pour augmenter la stabilité au stockage d'une boisson non alcoolisée allégée contenant de l'aspartame.
